# EUROPEAN PATENT SPECIFICATION

(11) **EP 1 695 632 B1**
(45) Date of publication and mention of the grant of the patent: **20.11.2013**
(21) Application number: 05425103.8
(22) Date of filing: 25.02.2005
(51) Int. Cl.: A21C 11/00, A23G 3/00, A23G 3/02, A21D 8/00, A21D 2/00, A23L 1/00, A21D 13/00, A21D 13/08

(54) **Apparatus and method for the production of short pastry bakery products, particularly biscuits, having edible particulates**
Vorrichtung und Verfahren zur Herstellung von Bäckereiprodukten, insbesondere Keksen, die essbare Partikeln haben
Appareil et procédé pour la production des produits de boulangerie de pâte brisée, en particulier biscuits, ayant des particules comestibles

(43) Date of publication of application: 30.08.2006
(73) Proprietor: BARILLA G. e R. Fratelli S.p.A., 43100 Parma (IT)
(72) Inventor: Bigliardi, Giancarlo, Barilla G. e R. F.lli S.p.A., 43100 Parma (IT); Buriani, Ernesto, Barilla G. e R. F.lli S.p.A., 43100 Parma (IT); Giovanetti, Marco, Barilla G. e R. F.lli S.p.A., 43100 Parma (IT); Panepinto, Onofrio, Barilla G. e R. F.lli S.p.A., 43100 Parma (IT)
(74) Representative: Zambardino, Umberto

(56) References cited:
- WO-A-94/02023
- WO-A-96/04799
- ES-A1- 2 143 955
- US-A- 3 158 486
- US-A- 4 795 647

## Description

### Field of application

In its more general aspect, the present invention relates to the field of bakery food products production.

In particular, the present invention relates to an apparatus and a method for the production of short pastry bakery products, particularly biscuits, having edible particulates.

### Prior art

In the field of short pastry bakery products production, in particular biscuits, the importance of including edible particulates, such as for example chocolate, raisins, candied fruit, sugar grains etc., in the starting dough mix, both for their organoleptic and nutritional qualities and for better distinguishing the end product, is well known.

By way of example, several types of shortbread biscuits comprising chocolate-based edible particulates meeting with a certain success, are well known.

These bakery products are normally obtained using a rotary moulding apparatus comprising two rollers arranged in parallel and in tangential contact with each other, a first roller, also referred to as the forming roller, having a surface whereon a plurality of forming moulds are made arranged according to a set pattern and of dimensions comparable to those of the desired end products and a second roller, also referred to as the feed roller, having a grooved surface.

The two rollers are in overhead communication with a hopper wherein a previously prepared short pastry dough mix, to which the desired edible particulates have already been added, is loaded.

The above rollers are made to move in opposite angular directions so that the dough mix can be pushed towards the area of tangential contact between the rollers through the grooves of the second roller which, still in the above-mentioned contact area, also pushes the dough into the moulds of the first roller so as to form a semi-finished bakery product in each mould.

The apparatus is also equipped with suitable devices for collecting the semi-finished bakery products from the moulds for then sending them on to baking in a suitable oven.

Although the above-mentioned apparatus is satisfactory and substantially meets the aim, it exhibits a serious drawback in that the edible particulates become substantially randomly incorporated in the dough mix during its forming between the above-mentioned rollers, thus obtaining, at the end of the forming, semi-finished products in which said edible particulates are not exposed or, at least, only a very small part of them can surface.

This is a disadvantage for the end short pastry bakery products, which are consequently poorly distinguishable from similar bakery products without edible particulates, as, in actual fact, they exhibit an outward appearance that is very similar to these latter ones.

Consequently, short pastry bakery products with edible particulates obtained with the above-mentioned apparatus do not enjoy considerable consumer appeal .

WO 94/02023 discloses a biscuit (12) produced by baking a short biscuit dough and containing an edible particulate material. At least a substantial proportion of this material has a particle diameter of not less than 1 mm, the biscuit (12) having a diameter of at least 40 mm, and the biscuit (12) being formed with at least one aperture (13), the area of the aperture(s) (13) constituting at least 10 % of the area of the biscuit (12) including the area of the aperture(s)), and the size, configuration and location of the aperture(s) (13) being such that zones adjacent to the periphery of a surface of the biscuit (12) or adjacent to the edge of the or each aperture (13) overlap to such an extent that the total area of overlap of different zones, excluding any connected area of overlap having an area less than 10 mm2 is not less than 15 % of the total area of the biscuit (12); (including the area of the aperture(s) (13)).

WO 96/04799 discloses a low fat, low density multigrain biscuit. Embedded into this biscuit is a low density, multigrain cereal topping. The topped biscuit is prepared from a foam batter. The topping is combined with and embedded into the foam batter prior to baking. This ensures a shelf-stable, wholesome final topped biscuit product.

US 3158486 discloses a process for the production of biscuits wherein a dry dough is comminuted into granules which are fused with granules of other cookie ingredients, such as for example chocolate, during baking.

ES 2143955 discloses a bakery product including a plurality of chocolate chips randomly inside the dough forming the product and introduced therein before final cooking of the dough takes place. The chocolate chips are distributed both in the central area of the dough and in the area proximate to the dough surface and the latter area defines surface projections where the chocolate chips are still covered by a thin layer of dough.

The technical problem underlying the present invention is that of providing an apparatus and related method for the production of short pastry bakery products, particularly biscuits, comprising edible particulates, wherein a part of said edible particulates is neatly exposed so as to overcome the drawbacks previously mentioned with respect to the cited prior art.

### Summary of the invention

Such a problem is solved, according to the invention, by an apparatus for the production of short pastry bakery products, particularly biscuits, having edible particulates, the apparatus comprising:
- a forming roller having a surface whereon a plurality of short pastry dough forming moulds are made, the dough comprising a first fraction of a plurality of edible particulates,
- a feed roller co-operating with the forming roller for pushing said short pastry dough comprising said first fraction of edible particulates to fill said moulds, thus forming a plurality of first semi-finished bakery products, each one in a respective mould,
- a conveyor belt co-operating with the forming roller for collecting said first semi-finished products from the respective moulds,
the apparatus being characterised in that
each of said moulds comprises a socket constituting the receiving seat for said dough mix comprising said first fraction of the plurality of edible particulates, each socket being formed on the surface of the forming roller in dimensions being substantially comparable to those of the desired end bakery products, and at least one cavity, preferably a plurality of cavities, formed in said sockets and each of them constituting a seat for an edible particulate of a second fraction of said plurality of edible particulates, said first semi-finished products thus having edible particulates of said first fraction substantially incorporated in said dough mix and edible particulates of said second fraction substantially raised from the surface of the dough, and in that it comprises:
a dispensing station for dispensing, according to a predetermined distribution, said second fraction of edible particulates in said moulds not yet occupied by said short pastry dough comprising said first fraction of edible particulates, so that said edible particulates of the second fraction can occupy at least part of the cavities of said moulds, and
a finishing roller having a surface whereon a plurality of moulds are made having substantially the same arrangement as that of the forming roller and dimensions comparable to those of said sockets, said roller co-operating with the conveyor belt so as to intercept said first semi-finished products in the respective moulds, compress, in such moulds, said raised edible particulates of the second fraction and release, from said moulds, a plurality of second semi-finished products wherein said edible particulates of the second fraction are substantially embedded or inserted into the surface of the dough.

The present invention is based on the fact that it has been surprisingly found that by mixing the short pastry dough with only part of the totality of the desired edible particulates and by shaping the moulds of the forming roller of a rotary moulding apparatus so as to provide distinct, and communicating seats for respectively containing the short pastry dough having the edible particulates associated therewith and the "free" edible particulates, i.e. not mixed with the short pastry dough, a semi-finished product is obtained wherein the above-mentioned free edible particulates can be arranged on the dough according to the desired pattern and in such a way that they are exposed.

Such arrangement cannot be attained with an apparatus that uses a traditional forming roller by simply providing for the separate loading, into the moulds, of the dough mix comprising the edible particulates and of the free edible particulates for example by first dispensing in the moulds the free edible particulates and then the dough mix comprising the edible particulates. In fact, in this case, upon rotation of the forming roller, the free edible particulates would drift towards an end portion of the respective moulds, and said free edible particulates would substantially mix with the dough. Therefore, the end result would be that the edible particulates are clustered together, in the semi-finished products extracted from the moulds, substantially becoming one lump.

On the contrary, with the forming roller according to the invention, first semi-finished products can be advantageously obtained wherein originally free edible particulates, i.e. not mixed with the short pastry dough, are raised with respect to the surface of the dough according to a predetermined arrangement which advantageously depends on the arrangement of the respective seats in the moulds and on the amount or number of edible particulates not mixed with the dough mix which are dispensed in each mould.

In accordance with the invention, said first semi-finished products can be treated with an additional finishing roller structurally similar to a forming roller of a conventional apparatus but having moulds of dimensions comparable to those of the desired products, preferably slightly greater, so as to intercept the above-mentioned first finished products in the moulds and compress the raised edible particulates into the dough until they are substantially inserted in the dough or flush with the surface of the dough itself.

Downstream of the finishing roller a plurality of second semi-finished products are thus obtained which, after baking, result in short pastry bakery products according to the invention wherein part of the edible particulates, i.e. the edible particulates not originally mixed with the dough, are exposed from the products themselves.

The above technical problem is also solved by a method for the production of short pastry bakery products having edible particulates which uses the above-mentioned apparatus. Such method comprises the steps of:
- preparing a short pastry dough mix comprising a first fraction of a plurality of edible particulates,
- loading said dough mix between said forming roller and said feed roller,
- continuously dispensing according to a predetermined distribution, a second fraction of said plurality of edible particulates in empty moulds of the forming roller so as to occupy at least part of the cavities of said moulds while said forming roller and said feed roller are made to rotate in opposite angular directions, thus obtaining a plurality of first semi-finished products wherein the edible particulates of said first fraction are substantially incorporated in said dough mix and the edible particulates of said second fraction are substantially raised with respect to the surface of the dough,
- running the conveyor belt along a forward direction concurrent with the forward direction of the forming roller surface generated by the rotation direction thereof, thus obtaining the release of said first semi-finished products from said moulds and the collection thereof on the conveyor belt,
- rotating said finishing roller in the same angular direction as the forming roller and at such a speed as to intercept said first semi-finished products in its moulds, compressing said raised edible particulates of the second fraction in said moulds and releasing therefrom a plurality of second semi-finished products wherein said edible particulates of the second fraction are substantially embedded onto the surface of the dough,
- recovering said second semi-finished products from the conveyor belt and sending them on to baking.

Preferably, the weight ratio of the edible particulates of said first fraction to the edible particulates of said second fraction varies between 30:70 and 70:30.

According to a particularly preferred embodiment, the weight ratio of the edible particulates of said first fraction to the edible particulates of said second fraction is of about 50:50.

Preferably, in the method according to the invention, the finishing roller has substantially the same angular speed as the forming roller.

Preferably, the forming roller, feed roller and the finishing roller have an angular speed comprised between 4 and 20 rpm.

Preferably, the running speed of the conveyor belt is comprised between 5 and 14 m/ min.

The characteristics and advantages of the invention will become clearer from the following description of a preferred embodiment, given by way of indicative and non-limiting example with reference to the annexed drawings wherein:
- figure 1 schematically shows a rotary moulding apparatus according to the prior art for the production of short pastry bakery products comprising edible particulates.
- Figure 2 shows a rotary moulding apparatus according to the invention for the production of short pastry bakery products comprising edible particulates.
- Figure 3 shows a detail of the apparatus of figure 2,
- Figure 4 shows a portion of a forming roller accomplished according to the invention and applicable to the apparatus of figure 2, and
- Figure 5 shows a drop-shaped shortbread biscuit having exposed chocolate particulates which can be obtained with the apparatus of figure 2 wherein the forming roller shown in figure 4 is used.

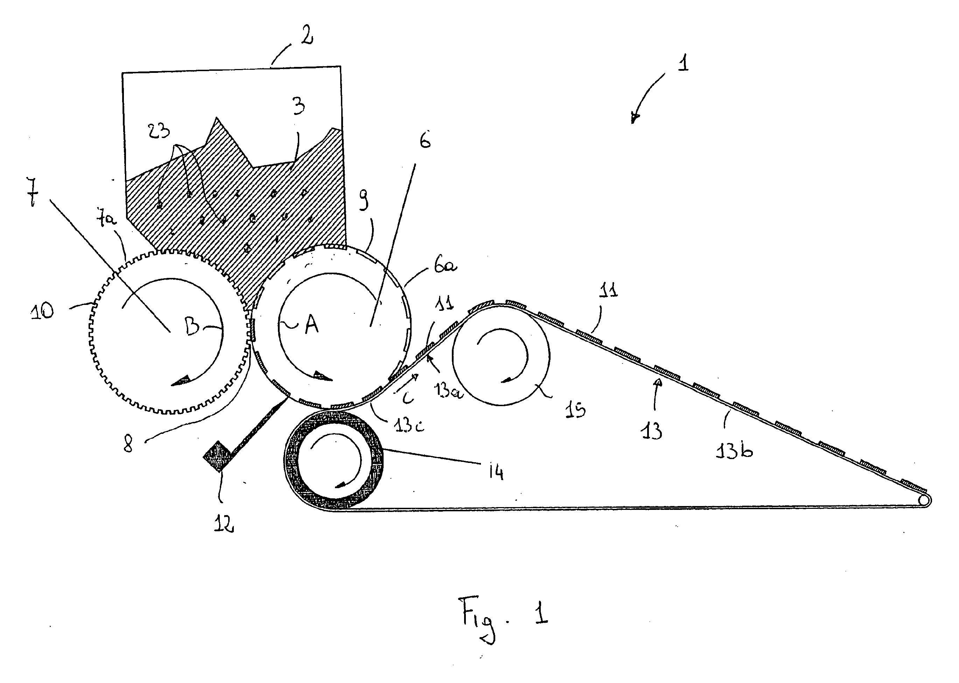

With reference to figure 1, a rotary moulding apparatus according to the prior art for the production of short pastry bakery products comprising edible particulates is globally indicated with 1.

The apparatus 1 comprises a hopper 2 in communication, beneath, with a first roller 6 and a second roller 7. A previously prepared short pastry dough 3 to which a predetermined amount of edible particulates 23 has been added is loaded in the hopper 2.

The first roller 6 and the second roller 7 are arranged substantially in parallel to each other and in tangential contact along a contact area 8.

The first roller 6, normally referred to as the forming roller, has a conveying surface 6a whereon a plurality of forming moulds 9 of the short pastry dough 3 containing edible particulates 23 are made. The forming moulds 9 have a predetermined distribution on the surface 9a of the first roller 6 and dimensions substantially comparable to those of the end short pastry products. The first roller 6 is preferably of a plastic material having a low adhesion coefficient, for example teflon.

The second roller 7, normally referred to as the feed roller, preferably has a surface featuring longitudinal grooves 10.

During the operation of the apparatus 1, the forming roller 6 and the feed roller 7 are made to rotate in opposite angular directions, respectively indicated with A and B, so that the dough mix 3 is conveyed towards the contact area 8 with the aid of the grooves 10 of the feed roller 7. Such grooves 10 also push the dough mix 3 into the moulds 9 of the forming roller 6 so as to fill them and to obtain a plurality of semi-finished products 11 having dimensions comparable to the end short pastry bakery products and that are made of portions of the dough 3 containing edible particulates 23.

Below the tangential contact area 8 between the forming roller 6 and the feed roller 7, the apparatus 1 comprises a scraper 12 in contact with the surface of the forming roller 6 and a conveyor belt 13 for the extraction and the collection of the semi-finished products 11 from the moulds 9.

The scraper 12 essentially has the function of removing any residues of dough 3 which may accumulate on the surface of the forming roller 6 and subsequently detach in correspondence with delicate elements of the machine, such as motors, gearing transmissions, etc. or which in any case could alter the surface finish of the forming roller 6.

The conveyor belt 13 is dragged by suitable rollers and it comprises an ascending section 13a located between a lower dragging roller 14 and an upper dragging roller 15, followed by a descending section 13b.

More in particular, the lower dragging roller 14 is arranged below the forming roller 6 in close proximity thereof and the upper dragging roller 15 is suitably distanced from the lower dragging roller 14 so as to have a portion 13c of the ascending section 13a substantially in contact with a circumferential portion of the forming roller 6.

Moreover, the forward direction C of the ascending section 13a is concurrent with the forward direction of the surface 6a of the forming roller 6 generated by the rotation direction A thereof.

The conveyor belt 13 is made of a material having an adhesion coefficient towards the dough mix 3 higher than that of the material of the forming roller 6, said material being preferably cloth. Thanks to this adhesion difference, the conveyor belt 13 can extract and collect on its conveying surface the semi-finished products 11 from the moulds 9 which cross the portion 13c of the conveyor belt 13 in contact with the forming roller 6.

Moreover, the lower dragging roller 14 is preferably made of rubber so as to compensate the squeezing of the conveyor belt 13 between the forming roller 6 and said lower dragging roller 14 which, otherwise, could damage the conveyor belt material 13.

The semi-finished products thus collected on the ascending section 13a of the conveyor belt 13 continue their path along the descending section 13b for then being sent on to a baking oven thus obtaining the end short pastry bakery products with edible particulates.

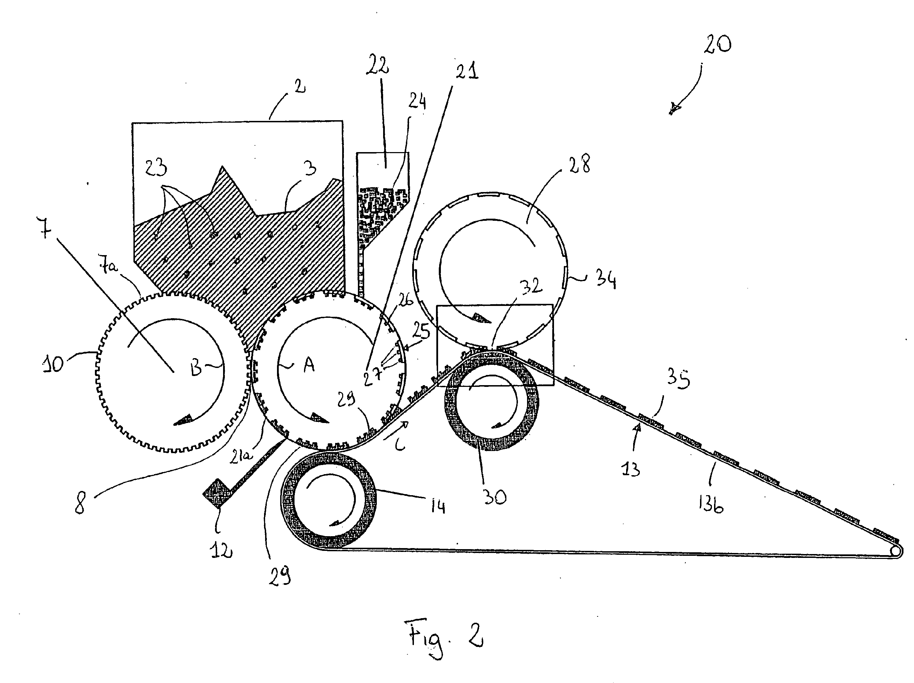

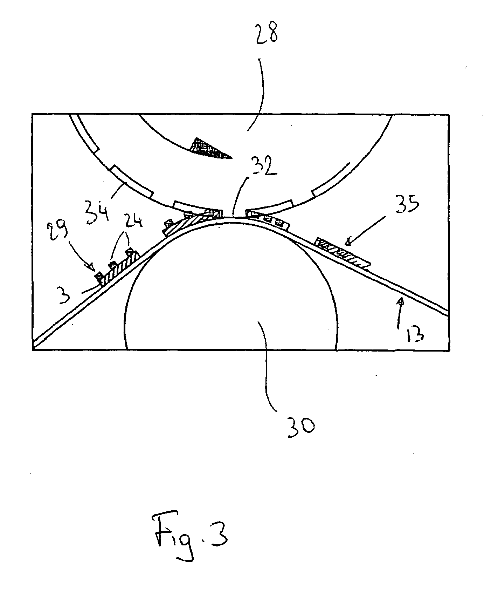

Referring now to figures 2 and 3, an apparatus according to the invention for the production of short pastry bakery products with exposed edible particulates is globally indicated with 20.

The same reference numbers will be given to the elements of the apparatus 20 that are structurally or functionally equivalent to those of the conventional apparatus 1.

The apparatus 20 comprises a hopper 2 for loading a dough mix 3 for short pastry comprising edible particulates 23, the hopper 2 being, in communication beneath with a forming roller 21 and a feed roller 7.

According to the present invention, the dough mix 3 comprises only a part of the edible particulates desired in the end short pastry products whereas the remaining part not mixed with the dough mix 3 is loaded separately by means of a dispenser 22. The edible particulates not mixed with the dough mix 3 are hereafter globally indicated with 24.

The dispenser 22 is arranged on the forming roller 21 so as to dispense predetermined amounts of said edible particulates 24 not mixed with the dough mix in empty moulds 25 of said forming roller 21, i.e. in moulds 25 not yet occupied by the dough mix 3 with the edible particulates 23 associated therewith.

The forming roller 21 and the feed roller 7 are arranged substantially parallel to each other and in tangential contact along a contact area 8. Moreover, the feed roller 7 preferably exhibits a surface with grooves 10 for conveying the dough mix 3 towards the contact area 8 between the forming roller 21 and the feed roller 7.

The forming roller 21 has a conveying surface 21a whereon a plurality of moulds generally indicated with 25 and distributed in a predetermined way are made. According to the present invention each mould 25 comprises a socket 26 constituting a receiving seat for the dough mix 3 mixed with the edible particulates 23, each socket 26 being formed on the conveying surface 21a of the forming roller 21 with dimensions substantially comparable to those of the desired end bakery products and at least one cavity 27, preferably a plurality of cavities 27, formed in said sockets 26 and each constituting a seat for an edible particulate 24 not associated with the dough mix 3.

Preferably, the cavities 27 are formed on a bottom surface of the corresponding sockets 26. The cavities 27 can have any shape, preferably a cylindrical or truncated conical shape. In particular, the use of a truncated conical shape favours the sliding of the edible particulates 24 in the cavities when the edible particulates 24 are made to fall by gravity in the empty moulds 25 from their dispenser 22.

Below the contact area 8 between the forming roller 21 and the feed roller 7, the apparatus 20 comprises a scraper 12 in contact with the surface 21a of the forming roller 21 and a conveyor belt 13 for the extraction and the collection of first semi-finished products 29 from the moulds 25 of the forming roller 21.

The function of the scraper 12 is equivalent to the one previously indicated in connection with the above described conventional apparatus 1.

The conveyor belt 13 is dragged by suitable rollers and comprises an ascending section 13a interposed between a lower dragging roller 14 and an upper dragging roller 30, followed by a descending section 13b.

More in particular, the lower dragging roller 14 is arranged below the forming roller 21 in close proximity thereof, and the upper roller 30 is suitably distanced from the lower dragging roller 14 so that the conveyor belt 13 is substantially in contact with a circumferential portion of the forming roller 21 along a portion 13c of the ascending section 13a.

Moreover, the forward direction C of the ascending section 13a is concurrent with the forward direction of the surface 21a of the first roller 21 generated by the rotation direction A thereof.

The conveyor belt 13 is made of a material having an adhesion coefficient for the dough mix 3 which is higher than that of the material of the forming roller 21. Suitable materials for the conveyor belt 13 are preferably cloth and similar fabrics.

Thanks to this difference in adhesion, the conveyor belt 13 can extract and collect on its surface the first semi-finished products 29 from the moulds 25 which cross the portion 13c of the conveyor belt 13 in contact with the forming roller 21.

The first semi-finished products 29 thus collected on the branch 13a of the conveyor belt 13, by virtue of the conformation of the respective moulds 25, consist of portions of the dough mix 3 comprising edible particulates 23 originally mixed therewith which are substantially incorporated in the dough mix 3 and edible particulates 24 not mixed with the dough mix 3 which are substantially in surface relief.

According to the invention, the apparatus 20 also comprises a third roller 28, or finishing roller, arranged above the upper dragging roller 30 of the conveyor belt 13 and substantially in tangential contact with said conveyor belt 13 in an area 32.

The finishing roller 28 has a plurality of moulds 34 substantially having the same arrangement as that of the moulds 25 of the finishing roller 21 and dimensions preferably comparable to those of the sockets 26 of the forming roller 21, preferably a little greater.

The finishing roller 28 is made to rotate in the same angular direction as the finishing roller 21 and with substantially the same angular speed so as to intercept in the respective moulds 34 the first semi-finished products 29 coming from the forming roller 21 and transported by the ascending branch 13a of the conveyor belt 13.

The first semi-finished products 29 thus intercepted in the moulds 34 undergo, in said tangential contact area 32, a compression of the edible particulates 24 raised on the dough mix 3, the entity of this pressure being however previously determined, by suitably dimensioning the moulds 34, so as to push the above-mentioned edible particulates 24 raised on the dough 23 until they are substantially embedded or inserted onto the surface of the dough mix 3 optionally until they are substantially flush with the surface of the dough mix 3.

Therefore, downstream of the contact area 32, a plurality of second semi-finished products 35 will be obtained wherein the edible particulates 24 will advantageously be exposed.

Said semi-finished products 35 are then led by the descending branch 13b of the conveyor belt 13 towards a baking oven wherefrom the end bakery products are obtained.

In the apparatus 20 according to the invention, it is worth noting that the lower dragging roller 14 and the upper dragging roller 30 are preferably made of rubber. In such way, the squeezing of the conveyor belt 13 is compensated for respectively between the forming roller 6 and said lower dragging roller 14 and between the upper dragging roller 30 and said finishing roller 28 which otherwise could damage the conveyor belt 13 material.

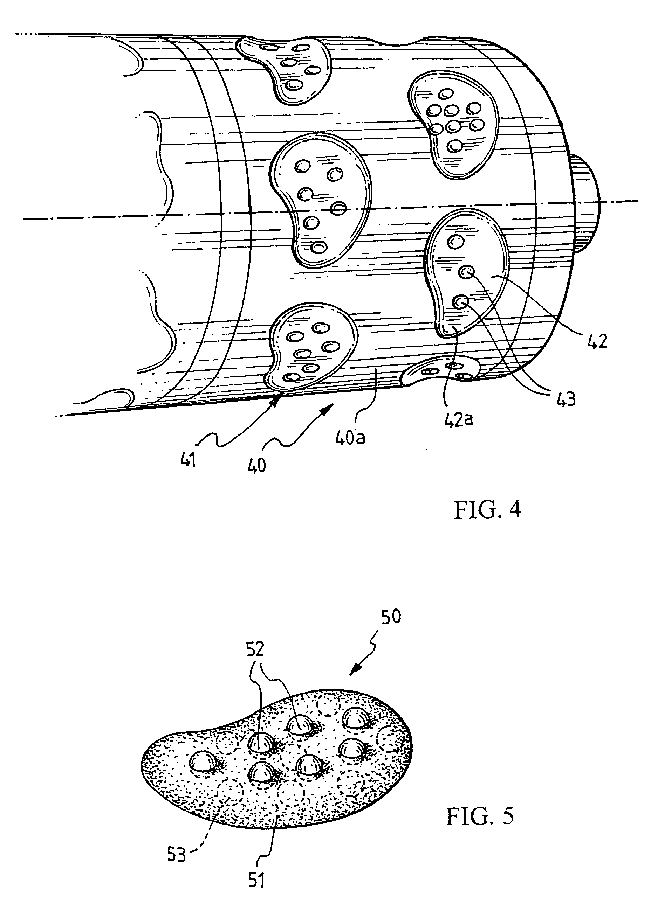

Figure 4 shows a forming roller 40 according to a preferred embodiment of the invention applicable to the apparatus 20 for the production of shortbread biscuits.

The roller 40 has a surface 40a whereon a plurality of moulds globally indicated with 41 and arranged according to a predetermined pattern are formed. Each mould 41 comprises a substantially drop-shaped socket 42 formed on the surface 40a and having dimensions comparable to those of the desired end biscuit, and a plurality of cavities 43 formed on the bottom surface 42a of the socket 42 and constituting the seats for an edible particulate, for example chocolate.

Each cavity can exhibit a substantially cylindrical or truncated conical shape (not shown) and the disposition of the cavities 43 in the respective sockets 42 may vary from socket to socket so as to obtain different distributions of the exposed edible particulates in the end biscuits, advantageously according to both the number of edible particulates 24 associated with each mould 41 and the effective cavities 43 occupied by said edible particulates 24.

Figure 5 shows a shortbread biscuit globally indicated with 50 which can be obtained using the apparatus 20 according to the invention whereon the forming roller 40 is mounted. The biscuit 50 comprises a substantially drop-shaped short pastry 51 comprising edible particulates 53 substantially incorporated in said short pastry 51 and edible particulates 52 embedded or inserted onto a surface of the short pastry, said embedded or inserted edible particulates 52 being therefore advantageously exposed on the biscuit 50. In particular, in the example of the shortbread biscuit 50 of figure 5, the embedded edible particulates 52 also slightly protrude from said short pastry surface.

According to a preferred embodiment of the invention, the weight ratio of the edible particulates incorporated in the short pastry 51 and the edible particulates embedded or inserted onto the surface of the short pastry 51 varies from 30:70 to 70:30.

According to a particularly preferred embodiment of the invention, the weight ratio between the edible particulates incorporated in the short pastry 51 and the edible particulates embedded or inserted onto the short pastry 51 is about 50:50.

The main advantage of the apparatus according to the invention lies in the possibility of obtaining therewith short pastry bakery products, particularly biscuits, having exposed edible particulates, with subsequent increase in appeal of these products to the end consumer.

In particular, with the present invention, the distribution of the exposed edible particulates on the single end short pastry products can advantageously be varied at one's will by simply varying the number and the distribution of the cavities in the moulds and the number of edible particulates introduced in each mould by the dispenser thereof. Therefore, the short pastry bakery products according to the invention are distinguished, apart by the presence of a certain generally high number of exposed edible particulates, also by a rustic appearance similar to that of home-made products.

Another advantage lies in that the present invention can be implemented in conventional rotary moulding apparatuses by simply substituting the forming roller of such apparatuses with a roller according to the invention and by providing a finishing roller and a dispenser for the edible particulates independent of the loading hopper of the dough mix.

The implementation of such modifications does not imply considerable expense thus making the present invention cheap to implement.

Example

A plurality of shortbread biscuits with chocolate particulates were produced starting from the ingredients shown in the following table together with the respective weight percentages.

**TABLE**

| Ingredients | Weight % |
|---|---|
| Flour | 60 |
| Sugar | 13,3 |
| Vegetable or animal fats | 15 |
| Glucose syrup | 1 |
| Leavening agents (ammonium bicarbonate and sodium bicarbonate) | 0,7 |
| Chocolate particulates | 10 |
| Total | 100 |

In particular, the above-mentioned ingredients, except from the chocolate particulates, were mixed in the respective weight percentages in a conventional mixer so as to obtain a homogeneous short pastry dough. As regards instead the chocolate particulates only about 50% of the total quantity thereof was introduced in the mixer for incorporation in the above dough mix.

The remaining 50%, approximately, of the total quantity of the chocolate particulates was instead loaded into the dispenser 22 according to the invention, thus obtaining that about 50% of the total chocolate particulates was mixed with the dough mix whereas the remaining 50% was loaded in the above-mentioned dispenser.

The chocolate particulates were available on the market and each had a weight of about 1g and a substantially conical shape with base of about 4, 5mm of diameter and about 4 mm in height.

The production of shortbread biscuits with exposed chocolate particulates was then continued using the apparatus according to the invention shown in figure 2 whereon a forming roller had been inserted as shown in figure 4. Each socket of such forming roller had 8 cavities each for the chocolate particulates. The cavities had substantially cylindrical shape, about 6 mm in diameter and about 4 mm in depth.

The finishing roller had a plurality of moulds having the same distribution of the moulds of the forming roller and dimensions comparable, preferably a slightly greater, to the sockets of the forming roller.

The operative settings of the apparatus were the following:
- rotation speed of the feed roller 7: 10 rpm,
- rotation speed of the forming roller 40: 10 rpm,
- rotation speed of the finishing roller 28: 10 rpm,
- forward speed of the conveyor belt 13: 11 m/min,
- number of chocolate particulates introduced into the moulds by the dispenser 22 = 8

At the end of the forming and finishing steps a plurality of semi-finished shortbread biscuits were obtained, which were baked at a temperature of 200°C for 9 minutes.

After baking a plurality of substantially drop-shaped shortbread biscuits were obtained, each of them presenting 8 chocolate edible particulates embedded on the surface of the short pastry and therefrom exposed.

## Claims

1. Apparatus (20) for the production of short pastry bakery products, particularly biscuits, having edible particulates, the apparatus comprising:
- a forming roller (21) having a surface (21a) whereon a plurality of short pastry dough forming moulds (25) are formed, said short pastry dough comprising a first fraction (23) of a plurality of edible particulates,
- a feed roller (7) co-operating with the forming roller (21) for pushing said short pastry dough mix (3) comprising said first fraction (23) of edible particulates to fill said moulds (25), forming a plurality of first semi-finished bakery products (29), each one in a respective mould (25),
- a conveyor belt (13) co-operating with the forming roller (6) for extracting said first semi-finished products (29) from the respective moulds (25),
the apparatus being **characterised in that**
each of said moulds (25) comprises a socket (26) constituting a receiving seat for said dough mix (3) comprising said first fraction (23) of the plurality of edible particulates, each socket (26) being formed on the surface (21a) of the forming roller (21) with dimensions substantially comparable to those of the desired end bakery products, and at least one cavity (27), preferably a plurality of cavities (27), formed in said sockets (26) and each constituting a receiving seat for an edible particulate of a second fraction (24) of said plurality of edible particulates, said first semi-finished products (29) having therefore edible particulates of said first fraction (23) substantially incorporated in said dough mix (3) and edible particulates of said second fraction (24) substantially raised with respect to the surface of the dough mix (3), and **in that** it comprises:
- a dispensing station (22) for dispensing, according to a predetermined distribution, said second fraction (24) of edible particulates in said moulds (25) not yet occupied by said short pastry dough mix (3) comprising said first fraction (23) of edible particulates, so as to allow said edible particulates of the second fraction (24) to occupy at least part of the cavities (27) of said moulds, and
- a finishing roller (28) having a surface whereon a plurality of moulds (34) are made having substantially the same arrangement of the moulds (25) of the forming roller (21) and dimensions comparable to those of said sockets (26), said finishing roller (28) co-operating with the conveyor belt (13) so as to intercept said first semi-finished products (29) in the respective moulds (34), compress in such moulds (34) said raised edible particulates of the second fraction (24) and release from said moulds (34) a plurality of second semi-finished products (35) wherein said edible particulates of the second fraction (24) are substantially embedded or inserted on the surface of the dough mix (3).

2. Apparatus (20) according to claim 1, **characterised in that** said forming roller (21) and said feed roller (7) are arranged substantially parallel to each other and are substantially in tangential contact through the respective surfaces (21a, 7a) in a contact area (8).

3. Apparatus (20) according to claim 2, **characterised in that** said forming roller (21) and said feed roller (7) are made to rotate in opposite angular directions (A, B) so as to form said first semi-finished products (29) in the respective moulds (25) in correspondence with said contact area (8).

4. Apparatus (20) according to any of the preceding claims, **characterised in that** said dispensing station comprises a dispenser (22) arranged on the forming roller (21) so as to dispense predetermined amounts of said edible particulates of the second fraction (24) in moulds (25) of said forming roller (21) not yet occupied by said dough mix (3) comprising said first fraction (23) of edible particulates.

5. Apparatus (20) according to any of the preceding claims, **characterised in that** it comprises a hopper (2) for loading said short pastry dough mix (23) comprising said first fraction (23) of edible particulates, said hopper (2) being in communication, beneath, with said forming roller (21) and said feed roller (7).

6. Apparatus (20) according to any one of claims 2 to 5, **characterised in that** said conveyor belt (13) is arranged below said contact area (8) between the forming roller (21) and the feed roller (7) and it comprises an ascending section (13a) interposed between a lower dragging roller (14) and an upper dragging roller (30), followed by a descending section (13b).

7. Apparatus (20) according to claim 6, **characterised in that** said lower' dragging roller (14) is arranged below the forming roller (21) in close proximity thereof and said upper dragging roller (30) is arranged below the finishing roller (28) in close proximity thereof so that said conveyor belt (13) is substantially in contact with a circumferential portion of the forming roller (21) along a portion (13c) of the ascending section (13a) and it is substantially in tangential contact with the finishing roller (28) in correspondence with said upper dragging roller (30).

8. Apparatus (20) according to claim 6 or claim 7, **characterised in that** said lower dragging roller (14) and said upper dragging roller (30) are made of rubber.

9. Apparatus (20) according to any of the preceding claims, **characterised in that** said forming roller (21) is made of a material having a low adhesion coefficient for said dough mix (23), preferably teflon.

10. Apparatus (20) according to any one of the preceding claims, **characterised in that** said conveyor belt (13) is made of a material having an adhesion coefficient for said first semi-finished products (29)higher than that of the forming roller (21).

11. Apparatus (20) according to claim 10, **characterised in that** said conveyor belt material (13) is cloth or similar materials.

12. Apparatus (20) according to any one of the preceding claims, **characterised in that** said cavities (27) are formed on the bottom surface of the respective sockets (26) and have a substantially cylindrical or truncated conical shape.

13. Apparatus (20) according to any one of the preceding claims, **characterised in that** said moulds (34) of the finishing roller (28) have dimensions slightly greater than those of said sockets (26) of the forming roller (21).

14. Apparatus (20) according to any one of the preceding claims from 2 to 13, **characterised in that** it comprises scraping means (12) arranged below said contact area (8) between the feed roller (7) and the forming roller (21), said scraping means (12) being in contact with the surface (21a) of the forming roller (21) for removing therefrom any excess of said dough mix (3).

15. Apparatus (20) according to any one of the preceding claims, **characterised in that** said surface (7a) of the feed roller (7) exhibits longitudinal grooves (10).

16. Forming roller (21, 40) applicable to an apparatus according to any one of the preceding claims for the production of short pastry bakery products having edible particulates, the forming roller having a surface (21a, 40a) whereon a plurality of forming moulds (25, 41) are made and **characterised in that** each mould (25, 41) comprises a socket (26, 42) constituting a receiving seat for a short pastry dough mix (23) comprising a first fraction (23) of edible particulates, said socket (26, 42) being formed on the surface (21a, 40a) of the forming roller (21, 40) with dimensions substantially comparable to those of the desired end bakery products, and at least one cavity (27, 43), preferably a plurality of cavities (27, 43) formed in said sockets (26, 42) and each of them constituting a receiving seat for an edible particulate of a second fraction (24) of edible particulates.

17. Forming roller (21, 40) according to claim 16, **characterised in that** at least one cavity (27, 43) is formed on the bottom surface of the respective socket (26).

18. Forming roller (21, 40) according to claim 16 or 17, **characterised in that** said at least one cavity (27, 23) exhibits a substantially cylindrical or truncated conical shape.

19. Method for the production of short pastry bakery products having edible particulates with an apparatus according to any one of claims from 1 to 15, the method comprising the steps of:
- preparing a short pastry dough mix (3) comprising a first fraction (23) of a plurality of edible particulates,
- loading said dough mix (3) between said forming roller (21) and said feed roller (7),
- continuously dispensing, according to a predetermined distribution, a second fraction (24) of said plurality of edible particulates in empty moulds (25) of the forming roller (21) so as to occupy at least part of the cavities (27) of said moulds (25) whereas said forming roller (21) and said feed roller (7) are made to rotate in opposite angular directions (A, B) thus obtaining a plurality of first semi-finished products (29) wherein the edible particulates of said first fraction (23) are substantially incorporated in said dough mix (3) and the edible particulates of said second fraction (24) are substantially raised from the surface of the dough mix (3).
- running the conveyor belt (13) according to a forward direction (C) concurrent with the forward direction of the surface (21a) of the forming roller (21) generated by the rotation direction thereof, thus obtaining the extraction of said first semi-finished products (29) from said moulds (25) and the collection thereof on the conveyor belt (13),
- rotating said finishing roller (28) according to the same angular direction of the forming roller (21) and at such a speed as to intercept said first semi-finished products (29) in their moulds (34), compress in said moulds (34) said raised edible particulates of the second fraction (24) and release from said moulds (34) a plurality of second semi-finished products (35) wherein said edible particulates of the second fraction (24) are substantially embedded or inserted onto the surface of the dough mix (3),
- recovering said second semi-finished products (35) from the conveyor belt and sending them on to baking.

20. Method according to claim 19, **characterised in that** said finishing roller (28) has an angular speed substantially equal to that of the forming roller (21).

21. Method according to claim 19 or claim 20, **characterised in that** said forming roller (21), said feed roller (7) and said finishing roller (28) have an angular speed comprised between 4 and 20 rpm.

22. Method according to any one of claims from 19 to 21, **characterised in that** the running speed of said conveyor belt (13) is comprised between 5 and 14 m/min.

23. Method according to any one of claims from 19 to 22, **characterised in that** the weight ratio of the edible particulates of said first fraction (23) to the edible particulates of said second fraction (24) varies from 30:70 and 70:30.

24. Method according to claim 23, **characterised in that** the weight ratio of the edible particulates of said first fraction (23) to the edible particulates of said second fraction (24) is about 50:50.

## Patentansprüche

1. Vorrichtung (20) für die Produktion von essbare Partikel aufweisenden Mürbteigbackwaren, insbesondere Keksen, wobei die Vorrichtung umfasst:
- eine Formwalze (21), die eine Oberfläche (21 a) hat, auf der eine Vielzahl von Mürbteigmasseformen (25) gebildet sind, wobei die Mürbteigmasse eine erste Fraktion (23) einer Vielzahl essbarer Partikel aufweist,
- eine Transportwalze (7), die mit der Formwalze (21) zusammenwirkt, um die Mürbteigmassemischung (3), die die erste Fraktion (23) essbarer Partikel umfasst, zusammenzupressen, um die Formen (25) zu füllen, und eine Vielzahl von ersten halbfertigen Backwaren (29) bildet, jede davon in einer einzelnen Form (25),
- ein Transportband (13), das mit der Formwalze (6) zusammenwirkt, um die ersten halbfertigen Produkte (29) aus den jeweiligen Formen (25) zu entnehmen,
wobei die Vorrichtung dadurch charakterisiert ist, dass
jede der Formen (25) eine Pfanne (26) umfasst, die einen Aufnahmeplatz für die Mürbteigmassemischung (3), die die erste Fraktion (23) der Vielzahl an essbaren Partikeln umfasst, bildet, wobei jede Pfanne (26) auf der Oberfläche (21a) der Formwalze (21) mit Abmessungen, die im Wesentlichen mit denen der gewünschten Endbackwaren vergleichbar sind, gebildet ist, und mindestens eine Vertiefung (27), bevorzugt eine Vielzahl von Vertiefungen (27), die in den Pfannen (26) ausgebildet sind und jede einen Aufnahmeplatz für ein essbares Partikel einer zweiten Fraktion (24) der Vielzahl von essbaren Partikeln bildet, wobei die ersten halbfertigen Backwaren (29) daher essbare Partikel der ersten Fraktion (23), die im Wesentlichen in die Teigmischung (3) integriert sind, und essbare Partikel der zweiten Fraktion (24), die im Wesentlichen gegenüber der Oberfläche der Teigmischung (3) erhaben sind, aufweisen,
und dadurch, dass sie umfasst:
- eine Dosierstation (22) zum Dosieren gemäß einer vorbestimmten Verteilung der zweiten Fraktion (24) essbarer Partikel in die Formen (25), die noch nicht durch die Mürbteigmassemischung (3), die die erste Fraktion (23) essbarer Partikel aufweist, besetzt sind, um es den essbaren Partikeln der zweiten Fraktion (24) zu ermöglichen, mindestens einen Teil der Vertiefungen (27) der Formen zu besetzen, und
- eine Endbearbeitungswalze (28), die eine Oberfläche hat, auf der eine Vielzahl von Formen (34), die im Wesentlichen die gleiche Anordnung der Formen (25) der Formwalze (21) und Abmessungen, die vergleichbar mit denen der Pfannen (26) sind, haben, gebildet sind, wobei die Endbearbeitungswalze (28) mit dem Transportband (13) zusammenwirkt, um die ersten halbfertigen Produkte (29) in den einzelnen Formen (34) abzufangen, in solchen Formen (34) die erhabenen essbaren Partikel der zweiten Fraktion (24) einzudrücken und von den Formen (34) eine Vielzahl von zweiten halbfertigen Produkten (35) zu lösen, wobei die essbaren Partikel der zweiten Fraktion (24) im Wesentlichen in die Oberfläche der Teigmischung (3) eingebettet oder eingelassen sind.

2. Vorrichtung (20) nach Anspruch 1, **dadurch gekennzeichnet, dass** die Formwalze (21) und die Transportwalze (7) im Wesentlichen parallel zueinander angeordnet sind und im Wesentlichen im tangentialen Kontakt durch die entsprechenden Oberflächen (21 a, 7a) in einem Kontaktbereich (8) stehen.

3. Vorrichtung (20) nach Anspruch 2, **dadurch gekennzeichnet, dass** die Formwalze (21) und die Transportwalze (7) ausgebildet sind, um in entgegengesetzte Winkelrichtungen (A, B) zu rotieren, um die ersten halbfertigen Produkte (29) in den jeweiligen Formen (25) entsprechend des Kontaktbereichs (8) zu bilden.

4. Vorrichtung (20) nach einem der vorangehenden Ansprüche, **dadurch gekennzeichnet, dass** die Dosierstation einen Spender (22), der auf der Formwalze (21) angebracht ist, um vorbestimmte Mengen der essbaren Partikel der zweiten Fraktion (24) in Formen (25) der Formwalze (21), die noch nicht durch die Teigmischung (3), die die erste Fraktion (23) essbarer Partikel umfasst, besetzt sind, zu verteilen, umfasst.

5. Vorrichtung (20) nach einem der vorangehenden Ansprüche, **dadurch gekennzeichnet, dass** sie einen Trichter (2) umfasst zum Einbringen der Mürbteigmassemischung (3), die die erste Fraktion (23) essbarer Partikel umfasst, wobei der Trichter (2) unterhalb in Verbindung mit der Formwalze (21) und der Transportwalze (7) steht.

6. Vorrichtung (20) nach einem der Ansprüche 2 bis 5, **dadurch gekennzeichnet, dass** das Transportband (13) unterhalb des Kontaktbereichs (8) zwischen der Formwalze (21) und der Transportwalze (7) angeordnet ist und es einen ansteigenden Abschnitt (13a) umfasst, der zwischen einer unteren Mitnehmerwalze (14) und einer oberen Mitnehmerwalze (30) eingefügt ist, gefolgt von einem absteigenden Abschnitt (13b).

7. Vorrichtung (20) nach Anspruch 6, **dadurch gekennzeichnet, dass** die untere Mitnehmerwalze (14) unterhalb der Formwalze (21) in unmittelbarer Nähe dazu angebracht ist und die obere Mitnehmerwalze (30) unterhalb der Endbearbeitungswalze (28) in unmittelbarer Nähe dazu angebracht ist, so dass das Transportband (13) im Wesentlichen in Kontakt mit einem umlaufenden Teil der Formwalze (21) entlang eines Teils (13c) des aufsteigenden Abschnitts (13a) steht und es im Wesentlichen in tangentialem Kontakt mit der Endbearbeitungswalze (28) in Entsprechung mit der oberen Mitnehmerwalze (30) steht.

8. Vorrichtung (20) nach Anspruch 6 oder 7, **dadurch gekennzeichnet, dass** die untere Mitnehmerwalze (14) und die obere Mitnehmerwalze (30) aus Gummi hergestellt sind.

9. Vorrichtung (20) nach einem der vorangehenden Ansprüche, **dadurch gekennzeichnet, dass** die Formwalze (21) aus einem Material hergestellt ist, das einen niedrigen Adhäsionskoeffizienten gegenüber der Teigmischung (23) aufweist, bevorzugt Teflon.

10. Vorrichtung (20) nach einem der vorangehenden Ansprüche, **dadurch gekennzeichnet, dass** das Transportband (13) aus einem Material hergestellt ist, das einen Adhäsionskoeffizienten aufweist, der gegenüber den ersten halbfertigen Produkten (29) höher ist als gegenüber der Formwalze (21).

11. Vorrichtung (20) nach Anspruch 10, **dadurch gekennzeichnet, dass** das Transportbandmaterial (13) Tuch oder ähnliches Material ist.

12. Vorrichtung (20) nach einem der vorangehenden Ansprüche, **dadurch gekennzeichnet, dass** die Vertiefungen (27) auf der unteren Fläche der entsprechenden Pfannen (26) gebildet sind und eine im Wesentlichen zylindrische Form oder Kegelstumpfform haben.

13. Vorrichtung (20) nach einem der vorangehenden Ansprüche, **dadurch gekennzeichnet, dass** die Formen (34) der Endbearbeitungswalze (28) Abmessungen aufweisen, die geringfügig größer sind als diese der Pfannen (26) der Formwalze (21).

14. Vorrichtung (20) nach einem der vorangehenden Ansprüche 2 bis 13, **dadurch gekennzeichnet, dass** sie Schabmittel (12), die unterhalb des Kontaktbereichs (8) zwischen der Transportwalze (7) und der Formwalze (21) angeordnet sind, umfasst, wobei die Schabmittel (12) in Kontakt mit der Oberfläche (21a) der Formwalze (21) stehen, um davon jeglichen Überschuss der Teigmischung (3) zu entfernen.

15. Vorrichtung (20) nach einem der vorangehenden Ansprüche, **dadurch gekennzeichnet, dass** die Oberfläche (7a) der Transportrolle (7) längliche Nuten (10) aufweist.

16. Formwalze (21, 40) anwendbar bei einer Vorrichtung nach einem der vorangehenden Ansprüche zur Herstellung von essbare Partikel aufweisenden Mürbteigbackwaren, wobei die Formwalze eine Oberfläche (21 a, 40a) aufweist, auf der eine Vielzahl an Formen (25, 41) gebildet sind und **dadurch gekennzeichnet, dass** jede Form (25, 41) eine Pfanne (26, 42), die einen Aufnahmeplatz für die Mürbteigmassemischung (23), die die erste Fraktion (23) der Vielzahl an essbaren Partikeln umfasst, bildet, umfasst, wobei die Pfanne (26, 42) auf der Oberfläche (21a, 40a) der Formwalze (21, 40) mit Abmessungen, die im Wesentlichen mit denen der gewünschten Endbackwaren vergleichbar sind, ausgebildet ist, und mindestens eine Vertiefung (27, 43), bevorzugt eine Vielzahl an Vertiefungen (27, 43), die in diesen Pfannen (26, 42) gebildet sind, und wobei jede davon einen Aufnahmeplatz für ein essbares Partikel einer zweiten Fraktion (24) essbarer Partikel bildet.

17. Formwalze (21, 40) nach Anspruch 16, **dadurch gekennzeichnet, dass** mindestens eine Vertiefung (27, 43) auf der unteren Fläche der betreffenden Pfanne (26) gebildet ist.

18. Formwalze (21, 40) nach Anspruch 16 oder 17, **dadurch gekennzeichnet, dass** die mindestens eine Vertiefung (27, 23) eine im Wesentlichen zylindrische Form oder Kegelstumpfform aufweist.

19. Verfahren zur Produktion von essbare Partikel aufweisenden Mürbteigbackwaren mit einer Vorrichtung nach einem der Ansprüche 1 bis 15, wobei das Verfahren folgende Schritte umfasst:
- Herstellung einer Mürbteigmassemischung (3), die eine erste Fraktion (23) einer Vielzahl essbarer Partikel umfasst,
- Einbringen der Teigmischung (3) zwischen die Formwalze (21) und die Transportwalze (7),
- kontinuierliches Verteilen, gemäß einer vorbestimmten Verteilung, einer zweiten Fraktion (24) der Vielzahl an essbaren Partikeln in leere Formen (25) der Formwalze (21), um mindestens einen Teil der Vertiefungen (27) der Formen (25) zu besetzen, wobei die Formwalze (21) und die Transportwalze (7) ausgebildet sind, um in entgegengesetzte Winkelrichtungen (A, B) zu rotieren, und um so eine Vielzahl erster halbfertiger Produkte (29) zu erhalten, wobei die essbaren Partikel der ersten Fraktion (23) im Wesentlichen in die Teigmischung (3) integriert sind und die essbaren Partikel der zweiten Fraktion (24) im Wesentlichen gegenüber der Oberfläche der Teigmischung (3) erhaben sind,
- Betreiben des Transportbandes (13) gemäß einer Vorwärtsrichtung (C) gleichlaufend mit der Vorwärtsrichtung der Oberfläche (21 a) der Formwalze (21), die durch die Drehrichtung davon erzeugt wird, und dadurch Erreichen der Entnahme der ersten halbfertigen Produkte (29) von den Formen (25) und Sammeln dieser auf dem Transportband (13),
- Rotieren der Endbearbeitungswalze (28) gemäß der gleichen Winkelrichtung der Formwalze (21) und mit einer solchen Geschwindigkeit, um die ersten halbfertigen Produkte (29) in ihren Formen (34) abzufangen, in diese Formen (34) die erhabenen essbaren Partikel der zweiten Fraktion (24) einzudrücken, und um aus diesen Formen (34) eine Vielzahl zweiter halbfertiger Produkte (35) zu lösen, wobei die essbaren Partikel der zweiten Fraktion (24) im Wesentlichen in die Oberfläche der Teigmischung (3) eingebettet oder eingelassen sind.
- Wiedergewinnen der zweiten halbfertigen Produkte (35) vom Transportband und Weiterschicken dieser zum Backen.

20. Verfahren nach Anspruch 19, **dadurch gekennzeichnet, dass** die Endbearbeitungswalze (28) eine Winkelgeschwindigkeit aufweist, die im Wesentlichen gleich mit der der Formwalze (21) ist.

21. Verfahren nach Anspruch 19 oder Anspruch 20, **dadurch gekennzeichnet, dass** die Formwalze (21), die Transportwalze (7) und die Endbearbeitungswalze (28) eine Winkelgeschwindigkeit aufweisen, die zwischen 4 und 20 Umdrehungen pro Minute (rpm) liegt.

22. Verfahren nach einem der Ansprüche 19 bis 21, **dadurch gekennzeichnet, dass** die Geschwindigkeit des Transportbandes (13) zwischen 5 und 14 m/min liegt.

23. Verfahren nach einem der Ansprüche 19 bis 22, **dadurch gekennzeichnet, dass** das Gewichtsverhältnis der essbaren Partikel der ersten Fraktion (23) zu den essbaren Partikeln der zweiten Fraktion (24) von 30:70 bis 70:30 reicht.

24. Verfahren nach Anspruch 23, **dadurch gekennzeichnet, dass** das Gewichtsverhältnis der essbaren Partikel der ersten Fraktion (23) zu den essbaren Partikeln der zweiten Fraktion (24) etwa 50:50 beträgt.

## Revendications

1. Appareil (20) de production de produits de boulangerie de pâte brisée, en particulier des biscuits possédant des particules comestibles, l'appareil comprenant :
un rouleau de formation (21) présentant une surface (21a) sur laquelle une pluralité de moules (25) de formation de pâte brisée sont formés, ladite pâte de pâte brisée comprenant une première fraction (23) d'une pluralité de particules comestibles,
un rouleau d'alimentation (7) coopérant avec le rouleau de formation (21) pour pousser ledit mélange de pâte brisée (3) comprenant ladite première fraction (23) de particules comestibles pour remplir lesdits moules (25), formant une pluralité de premiers produits de boulangerie semi-finis (29), chacun dans un moule (25) respectif,
une courroie transporteuse (13) coopérant avec le rouleau de formation (6) pour extraire lesdits premiers produits semi-finis (29) des moules (25) respectifs,
l'appareil étant **caractérisé en ce que**
chacun desdits moules (25) comprend une alvéole (26) constituant un siège de réception pour ledit mélange de pâte (3) comprenant ladite première fraction (23) de la pluralité de particules comestibles, chaque alvéole (26) étant formée à la surface (21a) du rouleau de formation (21) avec des dimensions sensiblement comparables à celles des produits de boulangerie finis souhaités, et au moins une cavité (27), de préférence une pluralité de cavités (27), formées dans lesdites alvéoles (26) et constituant chacune un siège de réception pour une particule comestible d'une seconde fraction (24) de ladite pluralité de particules comestibles, lesdits premiers produits semi-finis (29) possédant par conséquent des particules comestibles de ladite première fraction (23) sensiblement incorporées dans ledit mélange de pâte (3) et des particules comestibles de ladite seconde fraction (24) sensiblement surélevées par rapport à la surface du mélange de pâte (3), et **en ce qu'**il comprend :
une station de distribution (22) pour distribuer, selon une répartition prédéterminée, ladite seconde fraction (24) de particules comestibles dans lesdits moules (25) non encore occupés par ledit mélange de pâte brisée (3) comprenant ladite première fraction (23) de particules comestibles, afin de permettre auxdites particules comestibles de la seconde fraction (24) d'occuper au moins une partie des cavités (27) desdits moules, et
un rouleau de finition (28) présentant une surface sur laquelle une pluralité de moules (34) est façonnée pour avoir sensiblement le même agencement que les moules (25) du rouleau de formation (21) et des dimensions comparables à celles desdites alvéoles (26), ledit rouleau de finition (28) coopérant avec la courroie transporteuse (13) afin d'intercepter lesdits premiers produits semi-finis (29) dans les moules (34) respectifs, de comprimer dans de tels moules (34), lesdites particules comestibles surélevées de la seconde fraction (24) et de libérer desdits moules (34) une pluralité de seconds produits semi-finis (35), dans lequel lesdites particules comestibles de la seconde fraction (24) sont sensiblement incorporées ou insérées à la surface du mélange de pâte (3).

2. Appareil (20) selon la revendication 1, **caractérisé en ce que** ledit rouleau de formation (21) et ledit rouleau d'alimentation (7) sont agencés de manière sensiblement parallèle entre eux et sont sensiblement en contact tangentiel par le biais des surfaces (21a, 7a) respectives dans une zone de contact (8).

3. Appareil (20) selon la revendication 2, **caractérisé en ce que** ledit rouleau de formation (21) et ledit rouleau d'alimentation (7) sont façonnés pour tourner dans des directions angulaires opposées (A, B) afin de former lesdits premiers produits semi-finis (29) dans les moules (25) respectifs en correspondance avec ladite zone de contact (8).

4. Appareil (20) selon l'une quelconque des revendications précédentes, **caractérisé en ce que** ladite station de distribution comprend un distributeur (22) agencé sur le rouleau de formation (21) afin de distribuer des quantités prédéterminées desdites particules comestibles de la seconde fraction (24) dans des moules (25) dudit rouleau de formation (21) non encore occupés par ledit mélange de pâte (3) comprenant ladite première fraction (23) de particules comestibles.

5. Appareil (20) selon l'une quelconque des revendications précédentes, **caractérisé en ce qu'**il comprend une trémie (2) pour charger ledit mélange de pâte brisée (23) comprenant ladite première fraction (23) de particules comestibles, ladite trémie (2) étant en communication, au-dessous, avec ledit rouleau de formation (21) et ledit rouleau d'alimentation (7).

6. Appareil (20) selon l'une quelconque des revendications 2 à 5, **caractérisé en ce que** ladite courroie transporteuse (13) est agencée sous ladite zone de contact (8) entre le rouleau de formation (21) et le rouleau d'alimentation (7), et elle comprend une section ascendante (13a) intercalée entre un rouleau inférieur de traction (14) et un rouleau supérieur de traction (30), suivie par une section descendante (13b).

7. Appareil (20) selon la revendication 6, **caractérisé en ce que** ledit rouleau inférieur de traction (14) est agencé sous le rouleau de formation (21) à proximité immédiate de ce dernier et ledit rouleau supérieur de traction (30) est agencé au-dessous du rouleau de finition (28) à proximité immédiate de ce dernier de sorte que ladite courroie transporteuse (13) est sensiblement en contact avec une partie circonférentielle du rouleau de formation (21) le long d'une partie (13c) de la section ascendante (13a) et elle est sensiblement en contact tangentiel avec le rouleau de finition (28) en correspondance avec ledit rouleau supérieur de traction (30).

8. Appareil (20) selon la revendication 6 ou 7, **caractérisé en ce que** ledit rouleau inférieur de traction (14) et ledit rouleau supérieur de traction (30) sont en caoutchouc.

9. Appareil (20) selon l'une quelconque des revendications précédentes, **caractérisé en ce que** ledit rouleau de formation (21) est fabriqué en un matériau présentant un faible coefficient d'adhérence pour ledit mélange de pâte (23), de préférence du Téflon.

10. Appareil (20) selon l'une quelconque des revendications précédentes, **caractérisé en ce que** ladite courroie transporteuse (13) est fabriquée en un matériau présentant un coefficient d'adhérence pour lesdits premiers produits semi-finis (29) supérieur à celui du rouleau de formation (21).

11. Appareil (20) selon la revendication 10, **caractérisé en ce que** ledit matériau de la courroie transporteuse (13) est du tissu ou des matériaux similaires.

12. Appareil (20) selon l'une quelconque des revendications précédentes, **caractérisé en ce que** lesdites cavités (27) sont formées à la surface inférieure des alvéoles (26) respectives et présentent une forme sensiblement cylindrique ou tronconique.

13. Appareil (20) selon l'une quelconque des revendications précédentes, **caractérisé en ce que** lesdits moules (34) du rouleau de finition (28) ont des dimensions légèrement supérieures à celles desdites alvéoles (26) du rouleau de formation (21).

14. Appareil (20) selon l'une quelconque des revendications 2 à 13, **caractérisé en ce qu'**il comprend un moyen de racloir (12) agencé sous ladite zone de contact (8) entre le rouleau d'alimentation (7) et le rouleau de formation (21), ledit moyen de racloir (12) étant en contact avec la surface (21a) du rouleau de formation (21) pour en retirer tout excès dudit mélange de pâte (3).

15. Appareil (20) selon l'une quelconque des revendications précédentes, **caractérisé en ce que** ladite surface (7a) du rouleau d'alimentation (7) présente des rainures longitudinales (10).

16. Rouleau de formation (21, 40) applicable à un appareil selon l'une quelconque des revendications précédentes pour la production de produits de boulangerie de pâte brisée possédant des particules comestibles, le rouleau de formation présentant une surface (21a, 40a) sur laquelle sont façonnés une pluralité de moules de formation (25, 41) et **caractérisé en ce que** chaque moule (25, 41) comprend une alvéole (26, 42) constituant un siège de réception pour un mélange de pâte brisée (23) comprenant une première fraction (23) de particules comestibles, ladite alvéole (26, 42) étant formée à la surface (21a, 40a) du rouleau de formation (21, 40) avec des dimensions sensiblement comparables à celles des produits de boulangerie finis souhaités, et au moins une cavité (27, 43), de préférence une pluralité de cavités (27, 43) formées dans lesdites alvéoles (26, 42) et chacune d'elles constituant un siège de réception pour une particule comestible d'une seconde fraction (24) de particules comestibles.

17. Rouleau de formation (21, 40) selon la revendication 16, **caractérisé en ce qu'**au moins une cavité (27, 43) est formée à la surface inférieure de l'alvéole (26) respective.

18. Rouleau de formation (21, 40) selon la revendication 16 ou 17, **caractérisé en ce que** ladite au moins une cavité (27, 23) présente une forme sensiblement cylindrique ou tronconique.

19. Procédé de production de produits de boulangerie de pâte brisée présentant des particules comestibles avec un appareil selon l'une quelconque des revendications 1 à 15, le procédé comprenant les étapes consistant à :
préparer un mélange de pâte brisée (3) comprenant une première fraction (23) d'une pluralité de particules comestibles,
charger ledit mélange de pâte (3) entre ledit rouleau de formation (21) et ledit rouleau d'alimentation (7),
distribuer de manière continue, selon une répartition prédéterminée, une seconde fraction (24) de ladite pluralité de particules comestibles dans des moules (25) vides du rouleau de formation (21) afin d'occuper au moins une partie des cavités (27) desdits moules (25), tandis que ledit rouleau de formation (21) et ledit rouleau d'alimentation (7) tournent dans des directions angulaires opposées (A, B), obtenant ainsi une pluralité de premiers produits semi-finis (29), dans lequel les particules comestibles de ladite première fraction (23) sont sensiblement incorporées dans ledit mélange de pâte (3) et les particules comestibles de ladite seconde fraction (24) sont sensiblement surélevées par rapport à la surface du mélange de pâte (3),
faire fonctionner la courroie transporteuse (13) selon une direction d'avancement (C) correspondant à la direction d'avancement de la surface (21a) du rouleau de formation (21) générée par son sens de rotation, obtenant ainsi l'extraction desdits premiers produits semi-finis (29) desdits moules (25) et leur collecte sur la courroie transporteuse (13),
faire tourner ledit rouleau de finition (28) selon la même direction angulaire que le rouleau de formation (21) et à une vitesse telle qu'il intercepte lesdits premiers produits semi-finis (29) dans leurs moules (34), comprime dans lesdits moules (34) lesdites particules comestibles surélevées de ladite seconde fraction (24) et libère desdits moules (34) une pluralité de seconds produits semi-finis (35), dans lequel lesdites particules comestibles de la seconde fraction (24) sont sensiblement incorporées ou insérées sur la surface du mélange de pâte (3),
récupérer lesdits seconds produits semi-finis (35) de la courroie transporteuse et les soumettre à la cuisson.

20. Procédé selon la revendication 19, **caractérisé en ce que** ledit rouleau de finition (28) présente une vitesse angulaire sensiblement égale à celle du rouleau de formation (21).

21. Procédé selon la revendication 19 ou la revendication 20, **caractérisé en ce que** ledit rouleau de formation (21), ledit rouleau d'alimentation (7) et ledit rouleau de finition (28) présentent une vitesse angulaire comprise entre 4 et 20 tours par minute.

22. Procédé selon l'une quelconque des revendications 19 à 21, **caractérisé en ce que** la vitesse de déplacement de ladite courroie transporteuse (13) est comprise entre 5 et 14 m/min.

23. Procédé selon l'une quelconque des revendications 19 à 22, **caractérisé en ce que** le rapport de poids des particules comestibles de ladite première fraction (23) sur les particules comestibles de ladite seconde fraction (24) varie entre 30/70 et 70/30.

24. Procédé selon la revendication 23, **caractérisé en ce que** le rapport de poids des particules comestibles de ladite première fraction (23) sur les particules comestibles de ladite seconde fraction (24) est d'environ 50/50.
